Europäisches Patentamt

European Patent Office

Office européen des brevets

(11) Veröffentlichungsnummer : **0 387 629 B1**

(12) # EUROPÄISCHE PATENTSCHRIFT

(45) Veröffentlichungstag der Patentschrift :
**18.10.95 Patentblatt 95/42**

(51) Int. Cl.$^6$ : **G11B 5/706, H01F 1/11**

(21) Anmeldenummer : **90104074.1**

(22) Anmeldetag : **02.03.90**

(54) **Co-haltige magnetische Pigmente, Verfahren zu ihrer Herstellung sowie deren Verwendung.**

(30) Priorität : **15.03.89 DE 3908427**

(43) Veröffentlichungstag der Anmeldung :
**19.09.90 Patentblatt 90/38**

(45) Bekanntmachung des Hinweises auf die
Patenterteilung :
**18.10.95 Patentblatt 95/42**

(84) Benannte Vertragsstaaten :
**DE GB NL**

(56) Entgegenhaltungen :
**DE-A- 2 639 250**
**US-A- 3 725 126**
**IEEE TRANSACTIONS ON MAGNETICS, Band**
**MAG-23, Nr. 1, Januar 1987, Seiten 16-21; A.**
**EILING: "Co-modified pigments in magnetic**
**recording"**

(73) Patentinhaber : **TODA KOGYO CORP.**
**7-1 Yokogawa-Shinmachi**
**Nishi-ku**
**Hiroshima-shi Hiroshima-ken (JP)**

(72) Erfinder : **Buxbaum, Gunter, Dr.**
**Holzapfelweg 2**
**D-4150 Krefeld (DE)**
Erfinder : **Wiese, Jürgen, Dr.**
**Dörperhofstrasse 39**
**D-4150 Krefeld (DE)**
Erfinder : **Kiemle, Peter, Dr.**
**Bärenstrasse 53a**
**D-4150 Krefeld (DE)**
Erfinder : **Eiling, Aloys, Dr.**
**Schmiedestrasse 12**
**D-4630 Bochum 6 (DE)**

(74) Vertreter : **Lehn, Werner, Dipl.-Ing. et al**
**Hoffmann, Eitle & Partner,**
**Patentanwälte,**
**Postfach 81 04 20**
**D-81904 München (DE)**

## Beschreibung

Die vorliegende Erfindung betrifft ein Verfahren zur Herstellung magnetischer nadelförmiger Eisenoxidpigmente mit einem Co-Gehalt von 1 bis 5 Gew.-% und einem FeO-Gehalt von 5 bis 12 Gew.%, nach diesem Verfahren herstellbare Eisenoxidpigmente, sowie deren Verwendung.

Co-haltige magnetische Pigmente haben eine weite Verwendung in der Signalaufzeichnung gefunden, insbesondere bei der Herstellung von Video-Bändern.

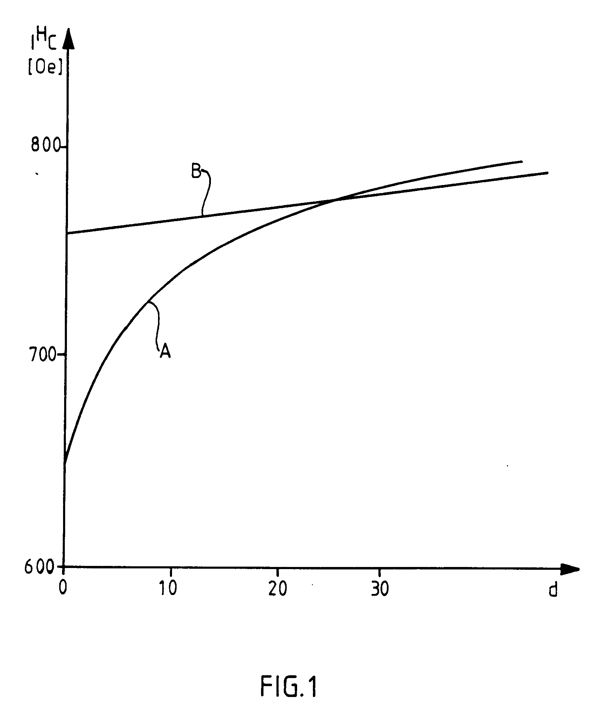

Da Cobalt ein teurer Zusatzstoff ist, hat es nicht an Versuchen gefehlt, mit so wenig Cobalt wie möglich ein Maximum an Aufzeichnungsdichte aufgrund entsprechend hohe Koerzitivfeldstarke zu erreichen. Die höchsten Koerzitivfeldstärken ($_iH_C$) erreicht man mit Cobalt-Masse-dotierten Ferrit-Pigmenten entsprechend der EP-B 14 363, die jedoch den Nachteil einer ungenügenden Lagerstabilität aufweisen. Diese Pigmente besitzen FeO-Gehalte von 16-24 Gew.-%. Wie dort bereits erwähnt, zeigen allerdings derartige Pigmente einen unerwünschten $_iH_c$-Anstieg nach der Herstellung bei Lagerung, was zu Änderung der magnetischen Aufzeichnungseigenschaften im Magnetband führt. Dieser Anstieg ist in Fig. 1,A zeitabhängig dargestellt.

FeO-haltige magnetische Eisenoxide zeigen, wie in IEEE Trans. Magn. , Vol MAG 21, 5. 1497-99 (1985) beschrieben, einen Abfall der Koerzitivkraft bei Lagerung in einem quer zur Bandrichtung verlaufenen Magnetfeld. Zur Durchführung dieses Test werden bei einer Temperatur von 30°C die Proben einem Magnetfeld von 318 kA/m (4 kOe) 8 resp. 30 Tage ausgesetzt und der Abfall der Koerzitivfeldstärke gemessen. Zur Vermeidung dieser nachteiligen Eigenschaften werden Co-umhüllte Pigmente empfohlen, die jedoch aufwendige Herstellungsverfahrensbedindungen und zur Erreichung der notwendigen iHc deutlich höhere Co-Mengen benötigen.

Co-dotierte $Y$-$Fe_2O_3$-Pigmente, wie sie aus DE-A-2 639 250 und US-A-3 725 126 hervorgehen, sind zwar hinsichtlich der genannten Belastungen stabil. Ihre Anwendung verbietet sich jedoch aufgrund des bekannten Abfalls der Remanenz bei leichter Wärmebelastung. Zudem weisen sie bei gleichen Co-Gehalten deutlich niedrigere $_iH_c$-Werte als Co-haltige Magnetit-Pigmente auf.

Aufgabe dieser Erfindung ist die Bereitstellung von Cohaltigen magnetischen Eisenoxiden, die die beschriebenen Nachteile nicht aufweisen.

Überraschenderweise wurde nun ein Verfahren gefunden, nach dem Pigmente hergestellt werden können, die bei einem FeO-Gehalt von 5-12 Gew.-% FeO sowohl eine hohe Koerzitivkraftausbeute wie bei hohen FeO-Gehalten als auch eine hinreichend gute Stabilität ($\Delta H_c(H)$ <10 %) aufweisen. Gegenstand der vorliegenden Erfindung ist ein Verfahren zur Herstellung FeO-haltiger magnetischer Cobalt dotierter Eisenoxidpigmente mit den Merkmalen des Anspruchs 1.

Beim Verfahrensprodukt handelt es sich um langzeitstabile, magnetische, nadelförmige Eisenoxidpigmente mit einem Co-Gehalt von 1-5 Gew.-% und einen FeO-Gehalt von 5-12 Gew.-% mit einer Querfeldstabilität von besser als 10 % und einer Koerzitivkraftstabilität von weniger als 2,4 A/cm/30 Tage (30 Oe/30 Tage).

Diese Pigmente können vorteilhaft zusätzliche Dotierungen von 0,1-5 Gew.-% Zink und/oder 0,1-5 % $SiO_2$ und/oder 0,1-3 % Phosphat aufweisen.

Besonders vorteilhaft werden diese Pigmente im feinteiligen Bereich von 25-45 m²/g BET-Oberfläche, gemessen nach der 1-Punkt-$N_2$-Methode, zur Videobandherstellung eingesetzt.

Die Einführung der Cobaltionen kann in jeder Phase der Fällungsreaktion erfolgen. Es ist auch möglich, das Kobalt nach Abschluß der Fällung auf die FeOOH-Teilchen aufzufällen, jedoch muß dies noch in der Fällungssuspension erfolgen. Dieses Verfahren wird bevorzugt bei FeOOH, das im pH-Bereich > 11 gefällt wurde, angewandt. Bei der Herstellung im pH-Bereich < 7 wird vorteilhaft das Kobalt bei der $\alpha$-FeOOH-Fällung mitgefällt. Besonders bevorzugt erfolgt die Kobaltfällung durch Zugabe von wasserlöslichen Cobaltsalzen von Mineralsäuren, insbesondere Schwefelsäure, nachdem bereits $\alpha$-FeOOH-Keime gebildet worden sind, da auf diese Weise eine besonders enge Pigmentteilchengrößenverteilung erreicht wird.

Die Modifizierung mit anorganischen Verbindungen gegen Versinterung kann durch gleichzeitige Fällung von Zink und/oder von $SiO_2$ oder $P_2O_5$ erfolgen. Die Ionen werden als wasserlösliche Verbindungen in die Fällungssuspension eingeführt. Dabei sind Mengen zwischen 0,1 und 5 % der Modifizierungssubstanzen, bezogen auf das Eisenoxid ausreichend. Die Modifizierungssubstanzen können auch nach abgeschlossener Fällung des Eisenoxidhydroxids auf die FeOOH-Teilchen aufgefällt werden. Die Auffällung soll dann in der Fällungssuspension erfolgen.

Die erhaltenen $\alpha$-FeOOH-Teilchen werden von der Fallungssuspension abgetrennt, in üblicher Weise gewaschen und entwässert und anschließend vorteilhaft bei Temperaturen von 600 bis 800°C getempert, Daran schließt sich die Reduktion zum $Fe_3O_4$ mit feuchtem Wasserstoff bei Temperaturen zwischen 300 und 500°C an. Nach Abkühlung des Magnetits auf 100 bis 200°C wird durch Zufuhr einer definierten Luftmenge, die vorzugsweise mit Stickstoff verdünnt wird, der erfindungsgemäße FeO-Gehalt von 5-12 Gew.-% eingestellt.

Der entscheidende Schritt des erfindungsgemäßen Verfahrens ist ein Tempervorgang, nachdem die endgültige Einstellung des FeO-Gehaltes erfolgt ist. Hierbei stellt sich eine im wesentlichen homogene Kobaltverteilung im Pigmente ein sowie eine offenbar spezifische strukturelle Stablisierung des Pigmentes, die für die hohen erfindungsgemäßen Kozeritivkrafte verantwortlich ist.

Die Temperung wird vorzugsweise in einer Atmosphare aus $CO_2$ und/oder $N_2$ durchgeführt. Ein geringer Sauerstoffgehalt in der Atmosphare, der etwa in der Größenordnung des Sauerstoffpartialdrucks von $CO_2$ bei der angewandten Temperatur liegt, ist vorteilhaft, ohne daß dadurch der FeO-Gehalt beeinfluß wird. Ohne daß Kristallitwachstum stattfindet, werden durch die Temperung bei Temperaturen oberhalb von 600°C die kristal-line Ordnung der Fehlordnungsphasen $Fe_3O_4$-$\gamma$-$Fe_2O_3$ erhöht, Gitterdefekte ausgeheilt und so die magnetischen Eigenschaften verbessert.

Die Temperung kann sich über einen Zeitraum von wenigen Minuten bis mehrere Stunden erstrecken, wobei die kürzeren Temperzeiten bei höheren Temperaturen angewendet werden. Bevorzugt ist eine Temperung zwischen 600 und 700°C während einer Zeitdauer von 10 Minuten bis 1 Stunde. Wichtig ist, daß auch die Abkühlung noch unter Intergas erfolgt.

An Luft sind diese Pigmente bei Umgebungsbedingungen stabil. Es kann jedoch zusätzlich an die Temperung eine Stabilisierung gegen Luftoxidation gemäß DE-A 2 625 106 angeschlossen werden. Eine üblicherweise durchgeführte Verdichtung mit Kugelmühlen oder Walzendichtern kann ebenso erfolgen wie eine der üblichen Nachbehandlungen zur Verbesserung der Dispergierbarkeit in Lacken.

Gegenstand dieser Erfindung ist auch die Verwendung der erfindungsgemäß hergestellten magnetische Eisenoxide für die Herstellung von magnetischen Aufzeichnungsmedien.

Die vorliegende Erfindung wird anhand der nachfolgenden Vergleichsbeispiele sowie der erfindungsgemäßen Beispiele näher erläutert. Die Messung der Koerzitivfeldstärke und remanenten Magnetisierung erfolgt dabei mit einem Probenvibrationsmagnetometer bei einer maximalen Feldstärke von 280 kA/m (3,5 KOe). Die Beispiele sind nicht als einschränkend zu betrachten. Der Fachmann wird durch geeignete Variation insbeondere der FeOOH-Vorläuferverbindung weitere Ausgestaltung mühelos finden. Die Mengenangaben sind gewichtsbezogen.

Beispiel 1

Herstellung des Co-dotierten FeOOH

a)
Aus 8000 kg $FeSO_4$, 75,7 kg $ZnSO_4$ x 7 $H_2O$ und 30,9 kg $NaH_2PO_4$ x 2 $H_2O$ in 40 m³ $H_2O$ wird mit 2000 kg in NaOH in 5 m³ $H_2O$ mit ca. 1000 m³ Luft/h die Keimsuspension in 5,5 Stunden hergestellt und nach Zugabe von 370 kg $CoSO_4$ x 7 $H_2O$ durch weitere Zufuhr von Natronlauge und Luft die Pigmentbildung innerhalb von 16 Stunden bis pH 3,5 durchgeführt, dann wird jeweils nach 15 Minuten der pH-Wert um 0,2 Einheiten erhöht Bei pH = 7,5 werden 15 l der Pigmentsuspension entnommen und bei 80°C mit einer Emulsion von 4,55 g eines Polydimethylsiloxanes (erhältlich unter der Bezeichnung Silikonöl M 100 der Fa. Bayer AG) in 73 ml $H_2O$ unter Rühren und Lufteinleiten versetzt und 15 Minuten nachgerührt. Anschließend wurde eine Lösung von 3,4 g $Na_4P_2O$ in 0,2 l $H_2O$ zugetropft und 30 Minuten nachgerührt.

b)
Aus 8000 kg $FeSO_4$, 75,7 kg $ZnSO_4$ x 7 $H_2O$ und 30,9 kg $NaH_2PO_4$ x 2 $H_2O$ in 40 m³ wird mit 2000 kg in NaOH in m³ $H_2O$ wie unter Beispiel la mit ca 1000 m³ Luft/h die Keimsuspension in 5,5 Stunden hergestellt und nach Zugabe von 245,5 kg $CoSO_4$ x 7 $H_2O$ durch weitere Zufuhr von Natronlauge und Luft die Pigmentbildung innerhalb von 16 Stunden bis pH 3,5 durchgeführt, dann wird jeweils nach 15 Minuten der pH-Wert um 0,2 Einheiten erhöht Bei pH = 7,5 werden 15 l der Pigmentsuspension entnommen und bei 80°C mit einer Emulsion von 4,55 g eines Polydimethylsiloxanes (Silikonöl M 100 der Fa. Bayer AG) in 73 ml $H_2O$ unter Rühren und Lufteinleiten versetzt und 15 Minuten nachgerührt. Anschließend wurde eine Lösung von 3,4 g $Na_4P_2O_7$ in 0,2 l $H_2O$ zugetropft und 30 Miuten nachgerührt.

Die Aufarbeitung geschieht durch Filtration und Waschung mit entsalztem Wasser bis das Filtrat weniger als 50 µS Leitfähigkeit zeigt. Die Trocknung erfolgt an Luft bei ca 120°C.

Beispiel 2

Herstellung der erfindungsgemäßen Pigmente mit 5-12 % FeO

a)
400 g des getrockneten $\alpha$-FeOOH-Vorproduktes aus Beispiel la werden auf eine Granliengröße von kleiner 1 mm geschrotet, in einem Labordrehofen bei 330°C unter Luft entwässert, innerhalb von 30 min auf 700°C aufgeheizt und 30 min getempert. Zur Reduktion wird auf 420°C abgekühlt und nach Spülen mit $N_2$ mit angefeuchtetem Wasserstoff in 105 min zum Co-dotierten $Fe_3O_4$ reduziert Unter $N_2$ wird auf 180°C abgekühlt und durch Zumischen von Luft (max 50 l/h) innerhalb von 42 min bis zu einem FeO-Gehalt von 9,6 Gew.-% oxidiert Anschließend wird das Pigment unter $N_2$ auf 500°C aufgeheizt und 30 min bei der Temperatur gehalten. Sofort nach dem Abkühlen unter $N_2$ werden die Magnetischen Daten bestimmte

b)

400 g des getrockneten $\alpha$-FeOOH-Vorproduktes aus Beispiel 1b wurden wie unter Beispiel 2a in das erfindungsgemäße Mischoxid-Pigment umgewandelt. Die Meßwert sind in der Tabelle 1 zusammengestellt:

**Tabelle 1**

| | % FeO | % Co | $_iH_c$ (kA/M) (neu) | $_iH_c$ (Oe) (neu) | $_iH_c$ (kA/M) nach 30 Tg. | $_iH_c$ (Oe) nach 30 Tg. | $\Delta\,_iH_c$ 30 d (kAm) | $\Delta\,_iH_c$ 30 d (Oe) | $\Delta\,_iH_c$ Querfeld % |
|---|---|---|---|---|---|---|---|---|---|
| Beispiel 2a | 9,6 | 1,8 | 56,6 | 711 | 58,2 | 731 | 1,59 | +20 | 6,43 |
| 2b | 10,1 | 1,2 | 47,1 | 592 | 48,4 | 608 | 1,27 | +16 | 6,08 |
| Vergleichsbeispiel 1 | 0,1 | 1,8 | 34,4 | 432 | 34,5 | 433 | 0,08 | +1 | 0 |
| Vergleichsbeispiel 2 | 22,1 | 1,8 | 52,2 | 656 | 62,2 | 781 | 9,9 | +125 | 26,8 |

<u>Vergleichsbeispiel 1</u>

Das Vorprodukt aus Beispiel 1a wurde wie in Beispiel 2a nach Entwässerung, Temperung bei 700°C und Reduktion bei 420°C auf 350°C abgekühlt. Dann wurde innerhalb von 120 min durch Luftzufuhr der FeO-Gehalt auf 0,1 % abgebaut Die Eigenschaften des Co-dotierten $\gamma$-$Fe_2O_3$ sind in der Tabelle 1 aufgeführt.

Vergleichsbeispiel 2

Das Vorprodukt aus Beispiel la wurde wie in Beispiel 2a in das magnetische Pigment umgewandelt jedoch mit dem Unterschied, daß die Anoxidation bei 180°C nur bis zu einem FeO-Gehalt von 22,1 % geführt wurden Die Temperung erfolgte wiederum bei 500°C. Diese Probe wurde in Abhängigkeit der Zeit gemessen. Tabelle 2 und die Abbildung zeigen den Koerzitivkraftverlauf mit der Lagerung (Kurve C in Fig. 1).

## Tabelle 2

| Tage | 0 | 2 | 6 | 10 | 16 | 24 |
|------|---|---|---|----|----|----|
| iHc (Oe) | 656 | 680 | 720 | 740 | 749 | 770 |
| (kA/m) | 52,2 | 54,1 | 57,3 | 58,9 | 59,6 | 61,3 |

Die Kurve läßt sich als Potenzfunktion mit $r^2 = 0,998$ sehr gut annähern:

$$iHc = 657 \times d^{0,0510} \text{ (Oe)}$$

bzw.

$$iHc = 52,3 \times d^{0,0510} \text{ (kA/m)}$$

Beispiel 3

Die Probe aus Vergleichsbeispiel 2 wurde bei 100°C auf 11,3 % FeO mit Luft oxidiert Daraufhin ergab sich der in der Tabelle 2 und der Abbildung dargestellte Koerzitivkraftgang (Kurve B in Fig. 1). Aufgrund der nur innerhalb der Meßgenauigkeit sich verändernden Werte läßt sich keine gute Kurvenanpassung vornehmen. Eine Ausgleichsgerade ergibt sich zu $_iH_c = 762 + 0,66 \times d$ (Oe), bzw. $_iH_c = 60,6 + 0,053 \times d$ (kA/m).

## Tabelle 3

| Tage | 0 | 7 | 14 | 21 | 28 | 37 | 42 |
|------|---|---|----|----|----|----|----|
| $_iH_c$ (Oe) | 766 | 769 | 770 | 774 | 768 | 798 | 790 |
| (kA/m) | 61,0 | 61,2 | 61,3 | 61,6 | 61,1 | 63,5 | 62,9 |

## Patentansprüche

1. Verfahren zur Herstellung von magnetischen, nadelförmigen Eisenoxidpigmenten mit einem Co-Gehalt von 1 - 5 Gew. % und einem FeO-Gehalt von 5 - 12 Gew.% und mit einer Querfeldstabilität von kleiner 10 % und einer Koerzitivkraftstabilität von weniger als 2.4 A/cm/30 Tage, gemessen bei Raumtemperatur, gekennzeichnet durch die Schritte:
   a. Fällen einer nadelförmigen FeOOH-Vorläuferverbindung aus Eisensalzen, Alkalien und Oxidationsmitteln unter Zusatz von Co-Salzen,
   b. Entwässern dieser Vorläuferverbindung zu Co-haltigem $\alpha$-Fe$_2$O$_3$ bei erhöhter Temperatur,
   c. gegebenenfalls Tempern bei 600 bis 800°C,
   d. Reduktion mit feuchtem Wasserstoff zu Co-haltigem Fe$_3$O$_4$ bei 300° bis 500°C,

e. partielle Oxidation mit $O_2$-haltigen Gasen bei 100°C bis weniger als 350°C unter Einstellung des FeO-Gehalts auf 5 - 12 Gew.%,

f. Tempern bei 400° bis 800°C unter inerten Bedingungen.

2. Verfahren gemäß Anspruch 1, wobei das Tempern f. bei 600° bis 700°C für einen Zeitraum von 10 Minuten bis 1 Stunde erfolgt.

3. Verfahren gemäß Anspruch 1 oder 2, wobei das Tempern f. in einer Atmosphäre aus $CO_2$ und/oder $N_2$, gegebenenfalls mit einem geringen Sauerstoffgehalt in der Größenordnung des Sauerstoffpartialdrucks von $CO_2$, durchgeführt wird.

4. Verfahren gemäß einem der Ansprüche 1 bis 3, wobei 0,1 - 5 Gew.-% Zink und/oder 0,1 - 3 % Phosphat und/oder 0,1 - 5 % $SiO_2$ bei Herstellung der $\alpha$-FeOOH-Vorläuferverbindung a., spätestens vor der Entwässerungsstufe b. zugesetzt werden.

5. Magnetische nadelförmige Eisenoxidpigmente mit einem CoGehalt von 1 - 5 Gew. % und einem FeO-Gehalt von 5 - 12 Gew.% und mit einer Querfeldstabilität von kleiner 10 % und einer Koercitivkraftstabilität von weniger als 2.4 A/cm/30 Tage, gemessen bei Raumtemperatur, erhältlich nach einem Verfahren gemäß einem der Ansprüche 1 bis 4.

6. Verwendung der nach einem Verfahren gemäß einem der Ansprüche 1 bis 4 erhältlichen magnetischen, nadelförmigen Pigmente zur Herstellung magnetischer Aufzeichnungsträger.

## Claims

1. Process for the preparation of magnetic, acicular iron oxide pigments having a Co content of 1-5% by weight and an FeO content of 5-12% by weight and having a transverse field stability of less than 10% and a coercive force stability of less than 2.4 A/cm/30 days, measured at room temperature, characterized by the steps:

a. Precipitation of an acicular FeOOH precursor compound from iron salts, alkalis and oxidizing agents with the addition of Co salts,

b. drying of this precursor compound to give Co-containing $\alpha$-$Fe_2O_3$ at elevated temperature,

c. optionally heating at 600 to 800°C,

d. reduction with moist hydrogen to give Co-containing $Fe_3O_4$ at 300° to 500°C,

e. partial oxidation with $O_2$-containing gases at 100°C to less than 350°C with adjustment of the FeO content to 5-12% by weight,

f. heating at 400° to 800°C under inert conditions.

2. Process according to Claim 1, in which the heating f. is carried out at 600° to 700°C for a period of 10 minutes to 1 hour.

3. Process according to Claim 1 or 2, in which the heating f. is carried out in an atmosphere of $CO_2$ and/or $N_2$, optionally with a low oxygen content of the order of magnitude of the oxygen partial pressure of $CO_2$.

4. Process according to any of Claims 1 to 3, in which 0.1-5% by weight of zinc and/or 0.1-3% of phosphate and/or 0.1-5% of $SiO_2$ are added during the preparation of the $\alpha$-FeOOH precursor compound a., before the drying stage b. at the latest.

5. Magnetic, acicular iron oxide pigments having a Co content of 1-5% by weight and a FeO content of 5-12% by weight and having a transverse field stability of less than 10% and a coercive force stability of less than 2.4 A/cm/30 days, measured at room temperature, obtainable by a process according to any of Claims 1 to 4.

6. Use of the magnetic, acicular pigments obtainable by a process according to any of Claims 1 to 4, for the production of magnetic recording media.

**Revendications**

1. Procédé de fabrication de pigments d'oxyde de fer magnétiques, de forme aciculaire, présentant une teneur en Co de 1-5% en poids et une teneur en FeO de 5-12% en poids, et avec une stabilité vis-à-vis des champs transversaux meilleure que 10% et une stabilité du champ coercitif, mesurée à température ambiante, meilleure que 2,4 A/cm/30 jours, caractérisé par les étapes comprenant:

   a. précipitation d'un composé précurseur aciculaire de FeOOH à partir de sels de fer, d'alcalis, et d'agents d'oxydation, avec addition de sels de Co,

   b. dessiccation à température élevée, de ces composés précurseurs en $\alpha$-$Fe_2O_3$ contenant du Co,

   c. recuit éventuel entre 600 et 800°C,

   d. réduction en $Fe_3O_4$ contenant du Co, à l'hydrogène humide, entre 300° et 500°C,

   e. oxydation partielle par des gaz contenant de l'$O_2$, entre 100°C et moins de 350°C, avec ajustement de la teneur en FeO à 5-12% en poids,

   f. recuit entre 400° et 800°C, dans des conditions inertes.

2. Procédé selon la revendication 1, dans lequel le recuit f. s'effectue entre 600° et 700°C pendant une durée de 10 minutes à 1 heure.

3. Procédé selon la revendication 1 ou 2, dans lequel le recuit f. est réalisé dans une atmosphère de $CO_2$ et/ou de $N_2$, éventuellement avec une petite teneur en oxygène, de l'ordre de grandeur de la pression partielle en oxygène du $CO_2$.

4. Procédé selon l'une des revendications 1 à 3, dans lequel on ajoute 0,1-5% en poids de zinc et/ou 0,1-3% de phosphate et/ou 0,1-5% de $SiO_2$ lors de la préparation en a. du composé précurseur en $\alpha$-FeOOH, et au plus tard avant l'étape de dessiccation b.

5. Pigments magnétiques aciculaires d'oxyde de fer présentant une teneur en Co de 1-5% en poids et une teneur en FeO de 5-12% en poids, et présentant une stabilité vis-à-vis des champs transversaux meilleure que 10% et une stabilité du champs coercitif, mesurée à température ambiante, meilleure que 2,4 A/cm/30 jours, obtenus par un procédé selon l'une des revendications 1 à 4.

6. Utilisation des pigments magnétiques aciculaires obtenus par un procédé selon l'une des revendications 1 à 4, pour la fabrication de supports magnétiques d'affichage.

FIG.1